# EUROPÄISCHE PATENTSCHRIFT

(11) **EP 1 518 087 B1**
(45) Veröffentlichungstag und Bekanntmachung des Hinweises auf die Patenterteilung: **18.10.2006**
(21) Anmeldenummer: 03761473.2
(22) Anmeldetag: 18.06.2003
(51) Int. Cl.: F41G 7/22, F41G 5/08

(54) **OBJEKT-SELBSTSCHUTZVORRICHTUNG**
SELF-PROTECTING DEVICE FOR AN OBJECT
DISPOSITIF D'AUTOPROTECTION POUR UN OBJET

(30) Priorität: 28.06.2002 DE 10229273
(43) Veröffentlichungstag der Anmeldung: 30.03.2005
(73) Patentinhaber: Diehl BGT Defence GmbH & Co.KG, 88662 Überlingen (DE)
(72) Erfinder: PAPPERT, Gunnar, 90518 Altdorf (DE); GÜNTHER, Andreas, 91207 Lauf (DE); KOCH, Volker, 90607 Rückersdorf (DE)
(74) Vertreter: Diehl Patentabteilung
(86) Internationale Anmeldenummer: PCT/EP2003/006418
(87) Internationale Veröffentlichungsnummer: WO 2004/003455

(56) Entgegenhaltungen:
- EP-A- 1 096 219
- DE-A- 4 426 014
- DE-A- 10 024 320

## Beschreibung

Die Erfindung betrifft eine Objekt-Selbstschutzvorrichtung gemäß dem Oberbegriff des Anspruches 1.

Eine derartige Objekt-Selbstschutzvorrichtung ist aus der DE 100 24 320 A1 bekannt. Dort wird eine Radareinrichtung mit Planarantenne aus gruppierten Einzelstrahlern für den Objekt-Selbstschutz gegen Bedrohung durch einen angreifenden Flugkörper beschrieben, wobei die Einzelstrahler in wenigstens einer vertikal orientierten Gruppe als Überwachungsradar am objektfesten Unterbau des Richtantriebes für einen Abschußbehälter von Splittergranaten angeordnet sind, der seinerseits mit einem vom Überwachungsradar eingewiesenen Zielverfolgungsradar für die Annäherungsbewegung des abzuwehrenden Flugkörpers ausgestattet ist. Diese bekannte Radareinrichtung, d.h. ihr Suchradar zur Einweisung des Zielverfolgungsradars bedingt einen erheblichen Entwicklungsaufwand. Außerdem ist das Suchradar in seiner Anschaffung relativ teuer.

Aus der EP 1 096 219 A1 ist es zur Detektion der Bedrohung eines stationären oder mobilen Objektes bekannt, mittels zweier Arrays von Fotodetektoren fächerartige, einander kreuzende Überwachungsbereiche zu erfassen, die vom Bedrohungsobjekt bei schon dichter Annäherung an das zu schützende Objekt gekreuzt werden müssen. Aus den Eintritts- und Austrittspunkten der beiden Überwachungsfächer sollen dann die für Abwehrmaßnahmen notwendigen Parameter berechnet werden, insbesondere Geschwindigkeit und Bewegungsrichtung der Bedrohung. Eine derartige Ermittlung des Angreifers ist allerdings recht zeitaufwendig und dabei lückenhaft, weil ein nur vergleichsweise sehr schmaler Raumsektor erfasst wird, und in diesem die Bedrohung erst im Nahbereich. Auch ist generell eine optische Sensorik nicht so leistungsfähig wie ein Nahbereichs-Radar, zumal wenn dieses von einer Weitbereichs-Objekterfassung zur Ermittlung der tatsächlichen Bedrohungsrichtung rechtzeitig vorher eingewiesen wird. Auch ist die Eigenverratsgefahr beim voreingewiesenen Nahbereichs-Radar nur noch gering, im Gegensatz zum rundum suchenden Weitbereichs-Radar für eine Femauffassung der Bedrohung.

Deshalb liegt der Erfindung die Aufgabe zugrunde, eine Objekt-Selbstschutzvorrichtung der eingangs genannten Art zu schaffen, bei welcher auf ein relativ kostenintensives Suchradar als objektfeste Überwachungseinrichtung verzichtet wird, ohne die Selbstschutzeigenschaften zu beeinträchtigen.

Diese Aufgabe wird erfindungsgemäß durch die Merkmale des Anspruches 1 gelöst. Bevorzugte Aus- bzw. Weiterbildungen der erfindungsgemäßen Objekt-Selbstschutzvorrichtung sind in den Unteransprüchen gekennzeichnet.

Bei deir erfindungsgemäßen Objekt-Selbstschutzvorrichtung ist die objektfeste Überwachungseinrichtung nicht von einem relativ kostenintensiven Überwachungsradar mit in wenigstens einer vertikal orientierten Gruppe angeordneten Einzelstrahlern sondern von einer passiven Sensoreinrichtung gebildet, die zur Winkeldetektion des anfliegenden und abzuwehrenden Flugkörpers vorgesehen ist. Die passive Sensoreinrichtung, die von einer bildgebenden und -verarbeitenden UV-Sensoreinrichtung oder von einer bildgebenden und -verarbeitenden IR-Sensoreinrichtung gebildet sein kann, dient außerdem zur Sensorfusion mit einfachem Radar-Missile Warner für eine eindeutige Nahbereichs-Detektion, wodurch beispielsweise Falschalarme vermieden werden. Der Abschußbehälter muß folglich bei einer Bedrohung durch einen aufliegenden Flugkörper nicht sofort geschwenkt werden. Ein weiterer Vorteil besteht in der relativ sicheren Abwehr auch von Bedrohungen, die im Nahbereich des zu schützenden Objektes, bei dem es sich insbesondere um ein zu schützendes Fahrzeug handelt, abgeschossen werden.

Die passive Sensoreinrichtung ist vorzugsweise als Rundum-Sensorik mit hoher Winkelmeßgenauigkeit ausgebildet. Die Rundum-Sensorik ermöglicht eine genaue Winkelermittlung des jeweiligen abzuwehrenden Flugkörpers beispielsweise durch Erfassen des Abschußblitzes oder der Triebwerkstrahlung des abzuwehrenden Flugkörpers. Die Rundum-Sensorik ist Weise mit einer Zielverfolgungs-Radareinrichtung kombiniert, die zur Bestimmung der Entfernung und der Geschwindigkeit des abzuwehrenden Flugkörpers im Nahbereich vorgesehen ist. Die Zielverfolgungs-Radareinrichtung kann eine starre Antennencharakteristik besitzen.

Durch die Nutzung eines Nahbereichs-Zielverfolgungsradars wird der relative Nachteil der passiven Sensoreinrichtung bezüglich der Reaktionszeit bei einer nah abgeschossenen Bedrohung in vorteilhafter Weise zumindest teilweise dadurch aufgehoben, daß das Nahbereichs-Zielverfolgungsradar sehr schnell die Entfernungs- und Geschwindigkeitskomponente der Bedrohung, d.h. des abzuwehrenden Flugkörpers, zur Verfügung stellt. Der Nahbereich beträgt z.B. für die AT-Munitionssignatur eines abzuwehrenden Flugkörpers zweckmäßigerweise größenordnungsmäßig 200 bis 300 m. In Kombination mit der beispielsweise nach ca. 25 bis 100 msec prozessierten Winkelinformation der passiven Sensoreinrichtung kann die am Abschußbehälter vorgesehene Zielverfolgungs-Radareinrichtung auf die sich nähernde Bedrohung eingeschwenkt werden. Die Zielverfolgungs-Radareinrichtung übernimmt im Zielübergabepunkt die Bedrohung.

Die Zielverfolgungs-Radareinrichtung ist vorzugsweise von einer Monopol-Radareinrichtung gebildet. Im Zielübergabepunkt der Bedrohung kann die Winkelinformation der Zielverfolgungs-Radareinrichtung durch die hohe Winkelmeßgenauigkeit der passiven Sensoreinrichtung in der Treffpunktsprädikation (Feuerleitung) entsprechend gestützt werden.

Bezüglich des System-Zeitaufwandes für eine erfolgreiche Bekämpfung beispielsweise einer Panzerabwehrmunition, die im Nahbereich des zu schützenden Objektes, d.h. des zu schützenden Fahrzeuges abgeschossen wird, ergibt sich erfindungsgemäß eine geringfügige Verlängerung des Zeitbedarfs, die Mängel einer rein passiven Lösung, die keine Entfernungs- und Geschwindigkeitsinformation liefert, werden jedoch eliminiert.

Die erfindungsgemäße Objekt-Selbstschutzvorrichtung weist folgende Vorteile auf:

Optimierung der Integrationsfähigkeit der Selbstschutzvorrichtung, d.h. des abstandswirksamen Schutzsystemes an beliebigen gepanzerten Fahrzeugen durch die Integration der vollständigen Sensorik am Abschußbehälter bzw. entlang des Fahrzeugturmes,

Nutzung von Radarsystemen in Kombination mit einer winkelauflösenden passiven Sensoreinrichtung und somit Nutzung der Vorteile des Radars bezüglich Allwetterfähigkeit, Unempfindlichkeit gegen Falschalarme und Sonkill-Maßnahmen, wobei das Radarsystem einfach aufgebaut ist,

Nutzung eines doppler- und entfernungsliefernden, relativ kleinen Nahbereichsradars in der Nähe der passiven Sensoreinrichtung am Fahrzeugturm zur Winkeldetektion und zur Einweisung der Zielverfolgungs-Radareinrichtung am Abschußbehälter zur granatachs-parallelen Zielverfolgung in allen drei Raumkoordinaten, d.h. zur Bestimmung von Entfernung, Geschwindigkeit und Winkelablage in Azimut und Elevation, zur Feuerleitung und Treffpunktprädikation,

Optimierung der Einweisgeschwindigkeit und -genauigkeit durch die Sensorfunktion, d.h. Winkelmessung durch die passive Sensoreinrichtung und Entfernungs- und Geschwindigkeitsmessung durch das Nahbereichsradar, d.h. die Zielverfolgungs-Radareinrichtung,

Anwendung von Standardkomponenten wie Cassgrainantennen/Frequency scanned Planaradar zur Risikominimierung und Entwicklungszeitverkürzung beispielsweise in einem AWISS-Werfer, und

Einfachheit der Feuerleit-Problematik, da die Zielverfolgungs-Radareinrichtung waffenparallel angeordnet ist, so daß Koordinatensystem-Transformationen auf ein Minimum reduziert sind.

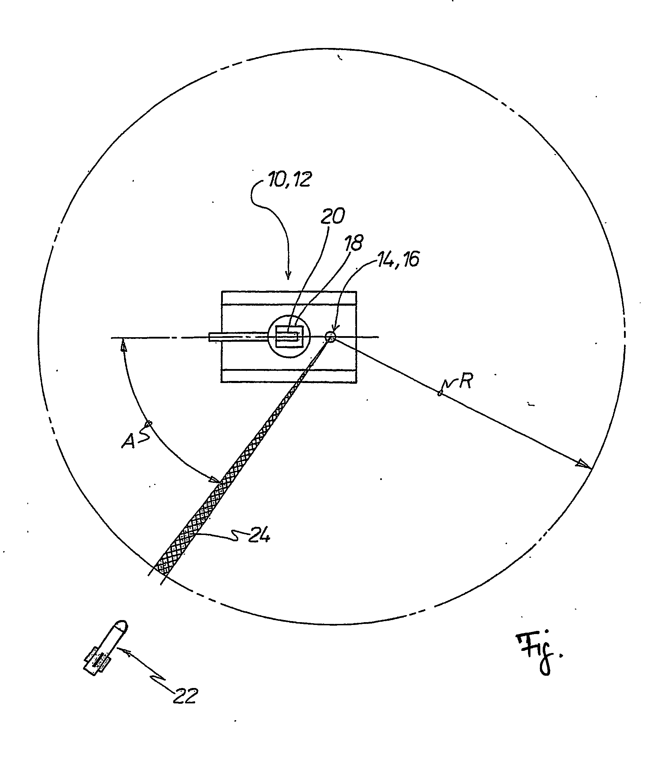

Ein Ausführungsbeispiel der erfindungsgemäßen Objekt-Selbstschutzvorrichtung wird nachfolgend in Verbindung mit einem in der Zeichnung schematisch dargestellten Ausführungsbeispiel eines Objektes in Gestalt eines gepanzerten Fahrzeuges sowie eines abzuwehrenden Flugkörpers beschrieben.

Die Figur zeigt in einer Ansicht von oben ein gepanzertes Fahrzeug 10 mit einer Objekt-Selbstschutzvorrichtung 12 mit einer objektfesten Überwachungseinrichtung 14, die von einer passiven Sensoreinrichtung 16 gebildet ist, und mit einem Abschußbehälter 18 insbesondere für Splittergranaten, der eine Zielverfolgungs-Radareinrichtung 20 zum Erfassen der Annäherungsbewegung eines abzuwehrenden Flugkörpers 22 aufweist.

Die passive Sensoreinrichtung 16 kann von einer bildgebenden und bildverarbeitenden IR-Sensoreinrichtung oder von einer bildgebenden und bildverarbeitetenden UV-Sensoreinrichtung gebildet sein. Die passive Sensoreinrichtung 16 ist als Rundum-Sensorik mit hoher Winkelmeßgenauigkeit ausgebildet. Das ist durch den Radiusstrahl R und den kreuzweise schraffierten schmalen Radialflächenbereich 24 schematisch verdeutlicht. Mit Hilfe der passiven Sensoreinrichtung 16 wird der Winkel A mit hoher Meßgenauigkeit bestimmt, unter welchem der abzuwehrende Flugkörper 22 das Fahrzeug 10 anfliegt.

Die Zielverfolgungs-Radareinrichtung 20 generiert keine Winkelinformation sondern sie dient einzig und allein dazu, die Entfernung und die Geschwindigkeit des abzuwehrenden Flugkörpers 22, insbesondere im Nahbereich, zu bestimmen. Die passive Sensoreinrichtung 16 und die Zielverfolgungs-Radareinrichtung 20 sind mit einem Richtantrieb für den Abschußbehälter 18 des zu schützenden Fahrzeuges 10 zusammengeschaltet.

## Patentansprüche

1. Objekt-Selbstschutzvorrichtung mit einer objektfesten Überwachungseinrichtung (14) zum Einweisen einer Zielverfolgungs-Radareinrichtung (20), für die Nahbereichs-Ermittlung von Entfernung und Geschwindigkeit eines abzuwehrenden Flugkörpers (22) an einem auf diese Bedrohung ausrichtbaren, Abschussbehälter (18), **dadurch gekennzeichnet, daß** die Überwachungseinrichtung (14) von einer passiven Sensoreinrichtung (16) gebildet ist, die als Rundum-Sensorik zur Winkeldetektion des anfliegenden Flugkörpers (22) ausgelegt ist.

2. Objekt-Selbstschutzvorrichtung nach Anspruch 1,
**dadurch gekennzeichnet,**
**daß** die passive Sensoreinrichtung (16) von einer bildgebenden und - verarbeitenden UV-Sensoreinrichtung gebildet ist.

3. Objekt-Selbstschutzvorrichtung nach Anspruch 1,
**dadurch gekennzeichnet,**
**daß** die passive Sensoreinrichtung (16) von einer bildgebenden undverarbeitenden IR-Sensoreinrichtung gebildet ist.

## Claims

1. Object self-defence apparatus having a monitoring device (14), which is fixed to the object, for alignment of a target-tracking radar device (20), for the near-area determination of the range and speed of a missile (22) to be defended against on a launch container (18) which can be aimed at this threat, **characterized in that** the monitoring device (14) is formed by a passive sensor device (16), which is in the form of an omnidirectional sensor system for detection of the angle of the approaching missile (22).

2. Object self-defence apparatus according to Claim 1,
**characterized**
**in that** the passive sensor device (16) is formed by an imaging and processing UV sensor device.

3. Object self-defence apparatus according to Claim 1,
**characterized**
**in that** the passive sensor device (16) is formed by an imaging and processing IR sensor device.

## Revendications

1. Dispositif d'autoprotection pour un objet avec une installation de surveillance d'objet fixe (14) pour l'instruction d'une installation de radar de poursuite d'objectif (20), avec un tube de mise à feu (18) dirigeable vers la menace, pour la détermination à courte distance de l'éloignement et la vitesse d'un missile à intercepter (22), **caractérisé en ce que** l'installation de surveillance d'objet fixe (14) est constituée par un système à capteur passif (16), lequel, en tant que système d'analyse sensorielle à rotation complète, est conçue pour la détection angulaire du missile (22) en approche.

2. Dispositif d'autoprotection pour un objet selon la revendication 1, **caractérisé en ce que** l'installation à capteur passive (16), est constituée par un système à capteur UV de restitution et de traitement d'image.

3. Dispositif d'autoprotection pour un objet selon la revendication 1, **caractérisé en ce que** l'installation à capteur passive (16), est constituée par un système à capteur IR de restitution et de traitement d'image.
